# FASCICULE DE BREVET EUROPEEN

(11) **EP 1 261 439 B1**
(45) Date de publication et mention de la délivrance du brevet: **11.01.2006**
(21) Numéro de dépôt: 01913949.2
(22) Date de dépôt: 07.03.2001
(51) Int. Cl.: B08B 3/04, B08B 3/02

(54) **SUBSTRAT A REVETEMENT PHOTOCATALYTIQUE ET/OU HYDROPHILE ASSOCIE A UN DISTRIBUTEUR D'EAU**
SUBSTRAT MIT EINER PHOTOKATALYTISCHEN UND/ODER HYDROPHILEN BESCHICHTUNG IN VERBINDUNG MIT EINEM WASSERVERTEILER
SUBSTRATE WITH PHOTOCATALYTIC AND/OR HYDROPHILIC COATING ASSOCIATED WITH A WATER DISTRIBUTOR

(30) Priorité: 08.03.2000 FR 0002954
(43) Date de publication de la demande: 04.12.2002
(73) Titulaire: SAINT-GOBAIN GLASS FRANCE, 92400 Courbevoie (FR)
(72) Inventeur: TALPAERT, Xavier, F-75019 Paris (FR)
(74) Mandataire: Muller, René
(86) Numéro de dépôt international: PCT/FR2001/000679
(87) Numéro de publication internationale: WO 2001/066271

(56) Documents cités:
- EP-A- 0 017 225
- EP-A- 0 594 171
- WO-A-99/44954
- DE-A- 2 717 532
- DE-A- 2 950 078

## Description

La présente invention concerne des substrats munis d'un revêtement photocatalytique et/ou d'un revêtement hydrophile, et leurs différentes applications.

Elle concerne plus particulièrement les revêtements photocatalytiques comprenant des matériaux semi-conducteurs à base d'oxyde métallique, notamment d'oxyde de titane, qui sont aptes, sous l'effet d'un rayonnement de longueur d'onde adéquate, à initier des réactions radicalaires provoquant l'oxydation de produits organiques. Ces revêtements permettent ainsi de conférer de nouvelles fonctionnalités aux matériaux qu'ils recouvrent, notamment des propriétés anti-satissures, fongicides ou bactéricides. Ils présentent généralement conjointement des propriétés hydrophiles.

L'invention concerne aussi les revêtements purement hydrophiles et qui ne sont pas photocatalytiques par nature.

Quelque soit le revêtement, beaucoup de substrats sont envisageables. Il peut notamment s'agir de matériau utilisé dans la construction de bâtiment, de matériau architectural, comme des matériaux de façade, de bardage, de toiture, de terrasses, de vitrages. On peut citer, de façon non limitative les matériaux suivants : verre, métal, vitrocéramique, céramique, ciment, brique, bois ... matériau reconstitué à partir de ces matériaux naturels, matériau en polymère organique notamment transparent, comme le polycarbonate.

Il est déjà connu des demandes de brevet internationales WO97/10186, WO97/10185 et WO99/44954 des revêtements contenant du TiO₂ cristallisé anatase à propriétés photocatalytiques, revêtements obtenus à partir de la décomposition thermique de précurseurs organo-métalliques appropriés et/ou à partir de particules de TiO₂ « pré-cristatlisées » et enrobées dans un liant minéral ou organique.

Il est également connu de la demande de brevet EP-A-0 594 171 de munir un substrat d'un revêtement à caractère hydrophile à base d'oxyde de silicium déposé par pyrolyse. Par ailleurs, la demande de brevet français FR99/13937 du 5 novembre 1999, correspondant à la demande PCT/FR00/03037 du 31 octobre 2000, des couches à caractère hydrophile à base de dérivé de silicium au moins partiellement oxydé comme de l'oxyde de silicium (stoechiométrique ou sous-stoechiométrique en oxygène), de l'oxycarbure et/ou de l'oxynitrure de silicium. Ces couches peuvent être déposées par voie sol-gel, par pyrolyse en phase vapeur ou encore par pulvérisation cathodique.

L'invention a alors pour but d'améliorer l'efficacité de ces différents types de revêtements, notamment afin que leurs performances (photocatalytiques et/ou hydrophiles) soient prolongées dans le temps.

L'invention a tout d'abord pour objet un substrat muni sur au moins une partie de sa surface d'un revêtement à propriétés photocatalytiques et/ou hydrophiles, et qui est associé à un dispositif apte à distribuer de l'eau sur ladite surface revêtue.

On entend par « eau » au sens de l'invention toute solution essentiellement aqueuse pouvant contenir un certain nombre d'additifs solubilisés, du type agent surfactant, agent lessiviel.

On entend par « substrat » tous les matériaux évoqués plus haut, notamment ceux de type architectural. L'invention s'intéresse plus particulièrement aux substrats transparents utilisés comme vitrage pour équiper des bâtiments, écrans de visualisation, mobiliers urbains. Ils sont généralement à base de substrats rigides en verre ou en matériau polymère. Ils peuvent aussi incorporer des substrats souples en matériau polymère, que l'on vient ensuite assembler à des substrats rigides.

Les revêtements photocatalytiques plus particulièrement visés sont ceux mentionnés plus haut, et qui comportent de l'oxyde de titane au moins partiellement cristallisé sous forme anatase. Le revêtement peut en outre comporter un autre type de matériau généralement sous forme d'au moins un oxyde, notamment amorphe ou partiellement cristallisé._Il peut s'agir d'oxydes du type oxyde de silicium, oxyde de titane, oxyde d'étain, oxyde de zirconium ou oxyde d'aluminium.

Bien que l'association d'un substrat en général à un distributeur d'eau soit connue du document EP-A-0 017 225, l'association d'un substrat ainsi fonctionnalisé avec un distributeur d'eau est assez inattendue, mais apporte une véritable amélioration. En effet, les revêtements photocatalytiques sont à même de dégrader des salissures quand elles sont oxydables, c'est-à-dire en fait des salissures de nature essentiellement organique. Il peut s'agir ainsi de traces de doigts, de résidus d'essence. Par contre, ces revêtements ne peuvent pas dégrader les salissures minérales. Ces salissures minérales ont tendance à recouvrir progressivement le revêtement, et risquent au bout d'un certain_temps de le désactiver en quelque sorte. Cela est d'autant plus vrai que ces revêtements présentent souvent une rugosité de surface destinée à augmenter leur surface active. Mais ce relief est aussi propice à l'encrassement par des salissures non dégradables par oxydation.

L'invention propose donc de projeter de l'eau selon une périodicité donnée à la surface de ces revêtements pour un double résultat :
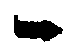 d'une part, l'eau est destinée à entraîner les salissures minérales, cet entraînement étant facilité quand le revêtement est hydrophile. Le vitrage se trouve aussi débarrassé d'une partie de ses salissures,
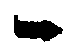 d'autre part, l'eau, en débarrassant le revêtement de ces salissures minérales, le rend plus efficace pour dégrader les salissures organiques (dans le cas d'un vitrage photocatalytique).

Ce double effet contribue à obtenir un vitrage qui, globalement, se salit moins dans le temps qu'un vitrage photocatalytique/hydrophile non équipé de distributeur d'eau ou qu'un vitrage standard. On peut ainsi espacer les nettoyages « agressifs » manuels avec détergents. Ce système permet de suppléer efficacement à une pluviométrie insuffisante ou à une disposition du substrat non exposée à la pluie. Ainsi, quand le vitrage est un peu en retrait de la façade d'un bâtiment ou dans une configuration peu favorable, il se peut qu'il ne soit jamais exposé à la pluie. Le distributeur d'eau selon l'invention permet ainsi de recréer l'effet d'entraînement des salissures par la pluie, mais de façon beaucoup plus homogène, sans laisser de traînées sur le vitrage, et sans son caractère aléatoire selon la localisation géographique ou la saison considérée.

L'invention est ainsi particulièrement utile dans trois cas de figure (qui peuvent être cumulatifs) :
➢ quand les vitrages sont exposés à des salissures minérales particulièrement, importantes/abondantes. Il peut s'agir par exempte de coulures de béton ou d'aluminium, ou de particules de sulfate de sodium que t'en rencontre fréquemment en atmosphère urbaine et qui rendent les vitrages flous,
➢ quand les revêtements sont modérément photocatalytiques/hydrophiles dès le départ (ou par encrassement progressif par des salissures minérales notamment),
➢ quand il ne pleut pas ou très peu, sur les vitrages, soit du fait des conditions climatiques, soit du fait de la configuration d'installation des vitrages (par exemple quand les vitrages sont montés sur une façade de bâtiment de façon à être affleurants sur le mur intérieur : il pleut rarement sur le vitrage, dans sa partie supérieure au moins),

Que les salissures minérales soient transparentes ou non, elles viennent diminuer le caractère photocatalytique/hydrophile du revêtement, par une sorte de passivation/"écrantage". Le revêtement devenant moins efficace, les nettoyages sont à nouveau nécessaires, même s'ils restent moins fréquents que pour des vitrages sans revêtement, ce qui reste gênant quand tes vitrages sont difficiles d'accès (vitrages de toitures notamment).

L'intérêt de l'invention consiste donc à permettre de diminuer encore la fréquence des nettoyages « conventionnels » nécessaires pour maintenir propres les vitrages, ceci par rapport à des vitrages non traités ou sans distributeur d'eau.

Par l'aspersion d'eau selon l'invention, on restitue au revêtement son efficacité, on améliore sa capacité à « s'auto-nettoyer » par une mesure simple, qui permet d'exploiter le caractère hydrophile du revêtement : l'eau, selon l'invention, vient entraîner l'excès de salissures minérales présentes à la surface des revêtements.

On peut voir au procédé selon l'invention deux avantages subsidiaires :
➢ d'une part, elle permet d'espacer les nettoyages conventionnels, donc d'utiliser moins de détergents, ce qui est bon pour l'environnement,
➢ d'autre part, les revêtements se trouvent ainsi moins sollicités mécaniquement (moins de frottements par des chiffons, des racloirs, ...) et s'usent donc moins.

L'invention est de mise en oeuvre simple. Ainsi, le distributeur d'eau peut comporter une simple rampe d'aspersion d'eau apte à mettre soit une série de jets d'eau discontinus, soit une lame d'eau, en direction de la surface revêtue du substrat. Le distributeur peut aussi comporter plusieurs rampes d'aspersion. Le plus simple est d'exploiter l'effet de gravité : quand le substrat revêtu, une fois monté, est vertical ou incliné, mais non horizontal, il suffit que la rampe d'eau distribue l'eau en direction de la partie haute de la surface revêtue, de façon à ce que l'eau ruisselle à sa surface par gravité jusqu'en partie basse.

Quand le substrat est un vitrage monté en extérieur, équipant une façade de bâtiment notamment, on peut disposer la rampe d'aspersion d'eau dans ou à proximité du boîtier de volet roulant qui équipe ce vitrage.

On peut aussi utiliser des rampes ou autres systèmes d'aspersion disposées sur ou à proximité des montants latéraux des vitrages (verticaux si le vitrage est selon un plan vertical), l'eau peut être projetée par exempte par deux rampes se faisant face et projetant l'eau vers la surface du vitrage en question.

On peut aussi associer au substrat revêtu selon l'invention un dispositif apte à collecter l'eau une fois écoutée à sa surface, par exemple une simple gouttière.

On peut prévoir que le dispositif de distribution d'eau, tout au moins sa partie terminale du type rampe d'aspersion, soit solidarisé au substrat par des moyens mécaniques, ainsi qu'éventuellement le dispositif de collecte d'eau. Il est préférable que ces moyens mécaniques permettent aisément de substituer une rampe par une autre en cas de défectuosité du distributeur d'eau.

La distribution d'eau peut être contrôlée de différentes façons : le contrôle peut être entièrement manuel, en distribuant l'eau dès que le vitrage paraît un peu sale. On peut aussi opter pour une distribution automatique, qui se déclenche toute seule à intervalles de temps fixes. On peut aussi prévoir une régulation plus sophistiquée, mettant en jeu des moyens électroniques/informatiques, et prenant en compte par exemple la pluviométrie ambiante (à l'aide d'un capteur d'humidité par exemple) ou le degré de salissure du revêtement (modifications optiques).

On peut ainsi faire la régulation en fonction de l'évolution du flou du vitrage (sa transmission diffuse dans le visible), en choisissant le seuil au delà duquel l'aspersion sera automatiquement déclenchée.

On peut contrôler la fréquence de la distribution d'eau, sa durée ainsi que le débit d'eau.

L'eau projetée sur les substrats selon l'invention peut être de l'eau sans additif, de l'eau de ville par exemple. On peut alors alimenter le distributeur d'eau à l'aide d'une arrivée d'eau banale, sans avoir à stocker un liquide particulier.

On peut aussi ajouter à l'eau un ou plusieurs additifs : il peut s'agir d'agents surfactants, d'agents dégraissants, généralement en faible quantité. On peut alors faire subir aux substrats en question non pas une aspersion en une étape, mais un cycle où se suivent au moins deux aspersions. On peut ainsi avoir un cycle en trois étapes : une aspersion avec de l'eau sans additif, une seconde aspersion avec de l'eau munie d'additifs puis une troisième avec de l'eau sans additif à nouveau jouant le rôle d'étape de rinçage. On peut aussi avoir un cycle de deux étapes seulement, en supprimant la première étape du cycle mentionné plus haut. Cela nécessite d'avoir autant de rampes d'aspersion que de liquides différents, ou d'utiliser une seule rampe d'aspersion dont on peut basculer l'alimentation automatiquement d'un type de liquide à un autre (à l'aide de réservoirs de stockage et/ou d'arrivées d'eau).

L'invention a aussi pour objet le procédé consistant à mettre en oeuvre cette combinaison d'un substrat fonctionnalisé par un revêtement photocatalytique et/ou hydrophile, avec un distributeur d'eau en vue de réactiver ledit revêtement, pour diminuer la fréquence de ses nettoyages ou retarder son encrassement (le distributeur d'eau étant apte à délivrer de l'eau sans additif, ou au moins pour partie de l'eau avec des additifs appropriés). Le procédé selon l'invention peut ainsi utiliser le distributeur d'eau décrit plus haut, il peut aussi utiliser d'autres moyens non nécessairement fixes de distribution d'eau, notamment commandés manuellement, comme un tuyau d'arrosage, un arrosoir ou tout contenant de liquide approprié.

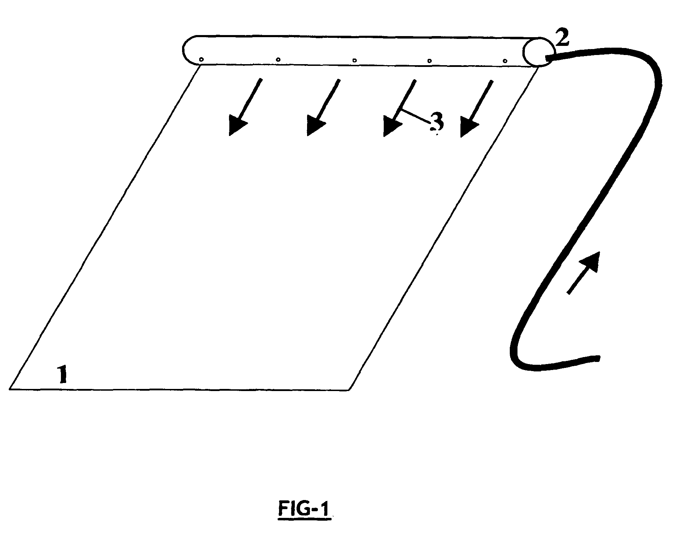

L'invention sera décrite plus en détail ci-après à l'aide d'exemples non limitatifs, et de la figure 1 qui représente de façon très schématique un vitrage dans une position où il est monté en extérieur sur une façade.

### EXEMPLE 1

Ce vitrage 1 est constitué d'un verre silico-sodo-calcique clair de 4 mm d'épaisseur, muni d'une couche mince en oxycarbure de silicium (SiOC) de 50 nm d'épaisseur, puis d'un revêtement photocatalytique comprenant du TiO₂ cristallisé anatase conformément à l'enseignement du brevet WO99/44954 précité, plus précisément proche de son exemple 15. Le dépôt du revêtement photocatalytique s'est fait par sol-gel selon une technique de spray-coating, à partir d'une dispersion mélangeant deux solutions/dispersions initiales 1 et 2 :
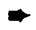 **solution 1 :** c'est la solution contenant le précurseur organe-métallique du liant minéral à base de TiO₂ et de SiO₂. Il s'agit de tétrabutoxyde de titane stabilisé avec de l'acétyl acétonate CH₃-CO-CH₂-CO-CH₃ et de tétraéthylorthosilicate (TEOS), en solution dans de l'éthanol et de l'éthylène glycol,
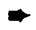 **dispersion 2:** c'est la phase liquide en éthylène glycol contenant les particules cristallisées photocatalytiques, de caractéristiques suivantes :

| | |
|---|---|
| ➢ surface spécifique des particules : | 350 m²/g |
| ➢ tailles des particules : | 45 nm |
| ➢ tailles des cristallites qui constituent les particules : | 7 nm |
| ➢ phase cristalline : anatase à plus de 80 % | |

On ajuste la composition de la dispersion issue du mélange de la solution 1 et de la dispersion 2 pour obtenir le rapport:

r₁=TiO₂ (particules)/(TiO₂ liants) voulu,

c'est-à-dire le rapport du poids de l'oxyde de titane provenant des particules de la dispersion 2 sur le poids de l'oxyde de titane (1) et de l'oxyde de silicium provenant de la solution 1. Ici le rapport r₁ est d'environ 50/50.

On a donc un revêtement photocatalytique par la présence des particules cristallisées, qui adhèrent au substrat grâce au liant formé par l'oxyde de titane et l'oxyde de silicium, plutôt amorphes, obtenus par la décomposition thermique des deux précurseurs de titane et de silicium.

### EXEMPLE 2

Cet exemple utilise le même substrat qu'à l'exemple 1, muni d'une première couche de SiOC de 50 nm puis d'une couche de TiO₂ photocatalytique déposé par « cell-coating » à partir d'une solution contenant du di-isopropoxy diacétylacétonate de titane et du tétra-octylène glycolate de titane en solution dans un mélange d'acétate d'étyle et d'isopropanol, conformément à l'exemple 9 du brevet W097/ 10186 précité.

### EXEMPLE 3

Cet exemple utilise toujours le même substrat, muni d'une première couche de SiOC de 50 nm puis d'une seconde couche de 60 nm de TiO2 photocatalytique obtenu par CVD à partir de tétra-isopropylate de titane, conformément à l'exemple 7 du brevet WO97/10186 précité.

Les trois vitrages ainsi fonctionnalisés peuvent être montés en façade de bâtiment. Comme ils se trouvent alors un peu en retrait, ils sont de fait peu exposés à la pluie, même s'il y en a. On ajoute donc en partie supérieure une rampe d'aspersion d'eau 2, elle aussi un peu en retrait de la façade de façon à être quasiment invisible vue de l'extérieur. Elle est raccordée à une source d'eau par un conduit approprié non représenté. Automatiquement toutes les semaines, la rampe peut distribuer pendant une à quelques minutes de l'eau sous forme de filets 3 venant ruisseler en nappe de haut en bas des vitrages, afin de « régénérer » le revêtement photocatalytique et le débarrasser des poussières minérales. Cette évacuation des poussières est d'autant plus facilitée que les trois revêtements photocatalytique sont tous très hydrophiles.

Pour mesurer l'effet bénéfique de l'invention sur l'efficacité des revêtements photocatalytiques, on a installé les trois vitrages décrits plus haut, ainsi qu'un quatrième vitrage dépourvu de tout revêtement à titre de comparaison, en milieu urbain. Les vitrages, de dimensions 40 x 40 cm, ont été placés en hauteur (50 mètres) pour avoir une ambiance de pollution urbaine "de fond" (c'est-à-dire non perturbée par une trop grande proximité des gaz d'échappemenent des automobiles), avec des salissures minérales principalement sous forme de particules de sulfate de calcium. On a installé un auvent en verre borosilicate (transparent aux UVA) pour protéger les vitrages de la pluie.

On a observé que :
➢ pour le verre comparatif sans revêtement photocatalytique, sa transmission diffuse passe de 0,2 à 5% de la transmission totale dans le_visible en deux mois environ,
➢ pour les trois autres verres munis du revêtement photocatalytique, la transmission diffuse augmente aussi, dans une moindre mesure cependant, et leurs activités photocatalytiques chutent significativement au bout d'un mois (d'environ 25 à 30%).

On a ensuite installé conformément à la présente invention, sous l'auvent, une rampe à eau constituée d'un tuyau percé de trous espacés de 1 cm les uns des autres et reliée à une pompe. La rampe asperge le haut des vitrages pendant 1 minute une fois par semaine (débit : 1 litre/minute).

Dans ces conditions, on a observé que la transmission diffuse des trois vitrages munis de revêtements photocatalytiques reste inférieure à 0,7% pendant au moins deux mois. Leurs activités photocatalytiques sont restées sensiblement les mêmes au bout d'un mois. Le verre comparatif sans traitement photocatalytique a une transmission diffuse qui atteint 2% de la transmission totale dans le visible (T_{L}) au bout de 2 mois. C'est donc la preuve qu'une aspersion par de l'eau suffit à éviter en grande partie la passivation des revêtements photocatalytiques et améliore_l'efficacité antisalissure.

Beaucoup de configurations sont possibles pour la rampe d'aspersion : elle peut être montée (de façon amovible) directement sur le montant du bord supérieur de la fenêtre (ou sur ses montants latéraux). Elle peut aussi être amovible sur la façade ette-même ou dans ou près d'un boîtier de volet roulant. ll est préférable de choisir la configuration la dissimulant le mieux, selon le montage du vitrage, le type de bâtiment, ....

Si le vitrage n'est pas vertical, et est peu incliné par rapport à l'horizontal, pour avoir un véritable effet d'entraînement, il peut être préférable que l'eau soit distribuée à forte pression. Sinon, un simple ruissellement à faible débit /faible pression par simple gravité est amplement suffisant : l'invention est efficace pour amplifier/allonger l'effet anti-satissures des revêtements photocatalytiques, et/ou hydrophiles, sans nécessiter d'appareillages complexes, et sans avoir à modifier structurellement lesdits revêtements, ce qui est tout à fait avantageux. Elle permet de diminuer significativement la fréquence des nettoyages manuels, ainsi que, parallèlement, la quantité de détergents utilisés tors de ces nettoyages.

L'invention s'applique de la même façon pour des vitrages munis de revêtements hydrophiles, sans être photocatalytiques, notamment à base de SiO₂, SiON ou SiOC, du type de ceux décrits dans la demande FR99/13937 précitée. Il s'agit plus particulièrement de revêtements à base d'oxyde ou d'oxycarbure de silicium d'indice de réfraction pouvant varier entre 1,45 et 1,80 (notamment 1,50 à 1,75 ou 1,55 à 1,68) et d'épaisseur d'au moins 5 nm, notamment comprise entre 10 et 60 nm. Leur angle de contact à l'eau est généralement inférieur à 35°c, notamment inférieur ou égal à 30°.

## Revendications

1. Substrat (1) muni sur au moins une partie de sa surface d'un revêtement à propriétés photocatalytiques et/ou hydrophiles, ***caractérisé en ce qu'**il* est associé à un dispositif (2) pour distribuer de l'eau sur ladite surface revêtue.

2. Substrat (1) selon la revendication 1, ***caractérisé en ce qu'**il* s'agit d'un matériau architectural du type matériau de façade, de bardage, de toiture de terrasse, vitrage.

3. Substrat (1) selon la revendication 1, ***caractérisé en ce qu'**il* s'agit d'un substrat transparent.

4. Substrat (1) selon la revendication 1, ***caractérisé en ce qu'**il* est en verre, en céramique, en vitrocéramique, en polymère organique souple ou rigide et de préférence transparent.

5. Substrat (1) selon l'une des revendications précédentes, ***caractérisé en ce que*** le revêtement est photocatalytique et comporte de l'oxyde de titane au moins partiellement cristallisé sous forme anatase.

6. Substrat (1) selon la revendication 5, ***caractérisé en ce que*** le revêtement comporte également un autre matériau minéral, notamment sous forme d'au moins un oxyde, notamment amorphe ou partiellement cristallisé et choisi parmi l'oxyde de silicium, l'oxyde de titane, l'oxyde d'étain, l'oxyde de zirconium, l'oxyde d'aluminium.

7. Substrat (1) selon l'une des revendications 1 à 4, **caractérisé en ce que** te revêtement est hydrophile et comporte un dérivé de silicium au moins partiellement oxydé, choisi notamment parmi l'oxyde de silicium stoechiométrique ou sous-stoechiométrique en oxygène, l'oxycarbure et/ou l'oxynitrure de silicium.

8. Substrat (1) selon l'une des revendications précédentes, ***caractérisé en ce que*** le dispositif (2) de distribution d'eau comporte au moins une rampe d'aspersion apte à émettre des jets d'eau (3) discontinus ou une lame d'eau en direction de la surface revêtue du substrat.

9. Substrat (1) selon l'une des revendications précédentes, ***caractérisé en ce qu'**il* s'agit d'un vitrage muni sur l'une de ses faces extérieures au moins d'un revêtement photocatalytique et/ou hydrophile, qui est disposé selon un plan non horizontal et associé à un dispositif de distribution d'eau comportant une rampe d'aspersion d'eau (2) apte à émettre un rideau d'eau ou des jets d'eau discontinus en direction de la partie haute de la face revêtue du substrat, de façon à ce que l'eau ruisselle sur ladite face jusqu'en partie basse.

10. Substrat (1) selon la revendication 9, ***caractérisé en ce que*** la rampe d'aspersion d'eau (2) est disposée dans ou à proximité du boîtier de volet roulant du vitrage.

11. Substrat (1) selon l'une des revendications précédentes, ***caractérisé en ce* qu'**il est également associé à un dispositif apte à collecter l'eau une fois écoulée sur la surface revêtue dudit substrat, notamment sous forme de gouttière.

12. Substrat (1) selon l'une des revendications précédentes, ***caractérisé en ce que*** le dispositif de distribution d'eau, et éventuellement le dispositif de collecte de l'eau, est solidarisé audit substrat par des moyens mécaniques.

13. Substrat (1) selon l'une des revendications précédentes, ***caractérisé en ce que*** la distribution d'eau est déclenchée périodiquement, de façon automatique et/ou est contrôlée manuellement et/ou est régulée par des moyens électroniques/informatiques..

14. Substrat (1) selon l'une des revendications précédentes, ***caractérisé en ce que*** tout ou partie de l'eau distribuée contient des additifs du type surfactants ou agents dégraissants.

15. Substrat (1) selon la revendication 14, ***caractérisé en ce que*** la distribution d'eau comporte au moins deux étapes d'aspersion consécutives, notamment une étape avec de l'eau contenant des additifs du type surfactants ou agents dégraissants et une étape avec de l'eau dépourvue d'additifs.

16. Procédé de « réactivation » de revêtements photocatalytiques et/ou hydrophiles disposés à la surface d'un substrat (1), notamment transparent du type vitrage, ***caractérisé en ce qu'**on* distribue de l'eau périodiquement à la surface desdits revêtements, au moyen d'un dispositif de distribution d'eau associé audit substrat.

17. Procédé selon la revendication 16, ***caractérisé en ce qu'on*** distribue l'eau de façon à provoquer un ruissellement de l'eau sur toute la surface du revêtement.

18. Procédé selon la revendication 16 ou la revendication 17, ***caractérisé en ce qu'**on* distribue l'eau à l'aide d'au moins une rampe d'aspersion (2) d'eau qui est apte à émettre des jets d'eau discontinus (3) ou un rideau d'eau continu dirigé(s) vers la surface revêtue, notamment de façon à ce que l'eau s'écoule de haut en bas de ladite surface située selon un plan non horizontal.

19. Procédé selon la revendication 18, ***caractérisé en ce qu'on*** distribue l'eau de façon automatique, selon une périodicité donnée, et/ou par contrôle manuel.

20. Procédé selon l'une des revendications 16 à 19, ***caractérisé en ce qu'on*** régule la distribution d'eau, notamment sa périodicité et son débit, en prenant en compte un certain nombre de paramètres comme le degré de salissure du revêtement ou la pluviométrie ambiante.

21. Procédé selon l'une des revendications 16 à 20, **caractérisé en ce qu'**on distribue l'eau selon des cycles d'aspersion comportant au moins deux aspersions consécutives, notamment une étape avec de l'eau contenant des additifs du type surfactant ou agent dégraissant et une étape avec de l'eau dépourvue d'additifs.

22. Utitisation d'un substrat assosié à un dispositif de distribution d'eau, selon l'une des revendications 1 à 15 pour diminuer la fréquence des nettoyages dudit substrat et/ou diminuer son encrassement par des salissures minérales.

## Patentansprüche

1. Substrat (1), das auf mindestens einem Teil seiner Oberfläche mit einer Beschichtung mit photokatalytischen und/oder hydrophilen Eigenschaften versehen ist, **dadurch gekennzeichnet, dass** es mit einer Vorrichtung (2) zum Verteilen von Wasser auf dieser beschichteten Oberfläche verbunden ist.

2. Substrat (1) nach Anspruch 1, **dadurch gekennzeichnet, dass** es sich um ein architektonisches Material vom Typ Fassaden-, Verkleidungs-, Flachdach- und Verglasungsmaterial handelt.

3. Substrat (1) nach Anspruch 1, **dadurch gekennzeichnet, dass** es sich um ein transparentes Substrat handelt.

4. Substrat (1) nach Anspruch 1, **dadurch gekennzeichnet, dass** es aus Glas, Keramik, Glaskeramik und einem nachgiebigen oder starren organischen Polymer besteht und vorzugsweise transparent ist.

5. Substrat (1) nach einem der vorhergehenden Ansprüche, **dadurch gekennzeichnet, dass** die Beschichtung photokatalytisch ist und Titanoxid enthält, das wenigstens teilweise in Form von Anatas kristallisiert ist.

6. Substrat (1) nach Anspruch 5, **dadurch gekennzeichnet, dass** die Beschichtung ein weiteres anorganisches Material enthält, speziell in Form mindestens eines Oxids, das insbesondere amorph oder teilweise kristallisiert ist und aus Silicium-, Titan-, Zinn-, Zirconium- und Aluminiumoxid ausgewählt ist.

7. Substrat (1) nach einem der Ansprüche 1 bis 4, **dadurch gekennzeichnet, dass** die Beschichtung hydrophil ist und ein wenigstens teilweise oxidiertes Siliciumderivat enthält, das insbesondere aus an Sauerstoff stöchiometrischem oder unterstöchiometrischem Siliciumoxid und Siliciumcarbidoxid und/oder Siliciumnitridoxid ausgewählt ist.

8. Substrat (1) nach einem der vorhergehenden Ansprüche, **dadurch gekennzeichnet, dass** die Vorrichtung (2) zur Wasserverteilung mindestens eine Sprühdüse enthält, die in der Lage ist, diskontinuierliche Wasserstrahlen (3) oder einen Wasserschleier (4) auf die beschichtete Oberfläche des Substrats zu sprühen.

9. Substrat (1) nach einem der vorhergehenden Ansprüche, **dadurch gekennzeichnet, dass** es sich um eine Glasscheibe handelt, die auf einer Außenfläche mit mindestens einer photokatalytischen und/oder hydrophilen Beschichtung versehen, in einer nicht horizontalen Ebene angeordnet und mit einer Vorrichtung zur Wasserverteilung verbunden ist, die eine Wassersprühdüse (2) enthält, die in der Lage ist, einen Wasserschleier oder diskontinuierliche Wasserstrahlen auf den oberen Teil der beschichteten Seite des Substrates derart zu schicken, dass das Wasser auf dieser Seite bis in den unteren Bereich hinabläuft.

10. Substrat (1) nach Anspruch 9, **dadurch gekennzeichnet, dass** die Wassersprühdüse (2) in oder in der Nähe von dem Rollladenkasten der Verglasung angeordnet ist.

11. Substrat (1) nach einem der vorhergehenden Ansprüche, **dadurch gekennzeichnet, dass** es auch mit einer Vorrichtung, insbesondere in Form einer Dachrinne, versehen ist, die in der Lage ist, das Wasser aufzunehmen, nachdem es auf der beschichteten Oberfläche des Substrats abgelaufen ist.

12. Substrat (1) nach einem der vorhergehenden Ansprüche, **dadurch gekennzeichnet, dass** die Wasserverteilvorrichtung und gegebenenfalls die Wassersammelvorrichtung durch mechanische Mittel mit dem Substrat fest verbunden ist (sind).

13. Substrat (1) nach einem der vorhergehenden Ansprüche, **dadurch gekennzeichnet, dass** die Wasserverteilung periodisch automatisch ausgelöst und/oder manuell gesteuert und/oder von elektronischen/Datenverarbeitungsmitteln geregelt wird.

14. Substrat (1) nach einem der vorhergehenden Ansprüche, **dadurch gekennzeichnet, dass** das verteilte Wasser insgesamt oder ein Teil davon Additive vom Typ Tensid oder Entfettungsmittel enthält.

15. Substrat (1) nach Anspruch 14, **dadurch gekennzeichnet, dass** die Wasserverteilung mindestens zwei aufeinander folgende Sprühstufen, insbesondere eine Stufe mit dem Wasser, das Additive vom Typ Tensid oder Entfettungsmittel enthält, und eine Stufe mit von Additiven freiem Wasser, umfasst.

16. Verfahren zum "Reaktivieren" von photokatalytischen und/oder hydrophilen Beschichtungen, die auf der Oberfläche eines Substrats (1), das insbesondere transparent und vom Typ einer Glasscheibe ist, angeordnet sind, **dadurch gekennzeichnet, dass** das Wasser periodisch auf der Oberfläche dieser Beschichtungen mittels einer Wasserverteilvorrichtung, die mit dem Substrat verbunden ist, verteilt wird.

17. Verfahren nach Anspruch 16, **dadurch gekennzeichnet, dass** das Wasser derart verteilt wird, dass es auf der gesamten Oberfläche der Beschichtung hinabläuft.

18. Verfahren nach Anspruch 16 oder 17, **dadurch gekennzeichnet, dass** das Wasser mittels mindestens einer Wassersprühdüse (2) verteilt wird, die in der Lage ist, diskontinuierliche Wasserstrahlen (3) oder einen kontinuierlichen Wasserschleier, die/der auf die beschichtete Oberfläche gerichtet ist/sind, insbesondere derart zu sprühen, dass das Wasser auf der Oberfläche, die sich in einer nicht horizontalen Ebene befindet, von oben nach unten hinabläuft.

19. Verfahren nach Anspruch 18, **dadurch gekennzeichnet, dass** das Wasser automatisch mit einer gegebenen Periodizität und/oder durch manuelle Steuerung verteilt wird.

20. Verfahren nach einem der Ansprüche 16 bis 19, **dadurch gekennzeichnet, dass** die Verteilung des Wassers, insbesondere dessen Periodizität und Durchsatz, geregelt wird, indem eine bestimmte Anzahl von Parametern wie der Verschmutzungsgrad der Beschichtung oder die Niederschlagsmessung in der Umgebung berücksichtigt wird.

21. Verfahren nach einem der Ansprüche 16 bis 20, **dadurch gekennzeichnet, dass** das Wasser in Sprühzyklen verteilt wird, die mindestens zwei aufeinander folgende Sprühvorgänge, insbesondere eine Stufe mit Wasser, das Additive vom Typ Tensid oder Entfettungsmittel enthält, und eine Stufe mit von Additiven freiem Wasser, umfassen.

22. Verwendung eines Substrats, das mit einer Wasserverteilvorrichtung verbunden ist, nach einem der Ansprüche 1 bis 15, um die Häufigkeit der Reinigung des Substrats und/oder dessen Verschmutzung mit anorganischen Schmutzstoffen zu verringern.

## Claims

1. A substrate (1) provided over at least part of its surface with a coating having photocatalytic and/or hydrophilic properties, ***characterized in that*** it is combined with a device (2) for distributing the water over said coated surface.

2. A substrate (1) as claimed in claim 1, ***characterized in that*** it involves an architectural material of the walling, cladding, flat roofing, glazing type.

3. The substrate (1) as claimed in claim 1, ***characterized in that*** it involves a transparent substrate.

4. The substrate (1) as claimed in claim 1, ***characterized in that*** it is made of a glass, a ceramic, a glass-ceramic, a flexible or rigid organic polymer and is preferably transparent.

5. The substrate (1) as claimed in one of the preceding claims, ***characterized in that*** the coating is photocatalytic and comprises at least partially crystallized titanium oxide in the anatase form.

6. The substrate (1) as claimed in claim 5, ***characterized in that*** the coating also comprises another mineral, especially in the form of at least one oxide, in particular an amorphous or partially crystallized oxide and chosen from silicon oxide, titanium oxide, tin oxide, zirconium oxide and aluminum oxide.

7. The substrate (1) as claimed in one of claims 1 to 4, ***characterized in that*** the coating is hydrophilic and comprises an at least partially oxidized silicon derivative, chosen in particular from silicon oxide which is stoichiometric or substoichiometric in oxygen, silicon oxycarbide and/or silicon oxynitride.

8. The substrate (1) as claimed in one of the preceding claims, ***characterized in* that** the device (2) for distributing water comprises at least one spray rail capable of emitting discontinuous water streams (3) or a sheet of water in the direction of the coated surface of the substrate.

9. The substrate (1) as claimed in one of the preceding claims, **characterized *in that*** it involves a glazing unit provided on one of its outer faces with at least one photocatalytic and/or hydrophilic coating, which is arranged in a nonhorizontal plane and combined with a device for distributing water comprising a water spray rail (2) capable of emitting a curtain of water or discontinuous water streams in the direction of the top part of the coated face of the substrate, so that the water runs down over said face down to the bottom part.

10. The substrate (1) as claimed in claim 9, ***characterized in* that** the water spray rail (2) is placed in or close to the roller shutter casing of the glazing unit.

11. The substrate (1) as claimed in one of the preceding claims, ***characterized in that*** it is also combined with a device capable of collecting the water once it has flowed over the coated surface of said substrate, in particular in the form of a gutter.

12. The substrate (1) as claimed in one of the preceding claims, ***characterized in that*** the water distribution device, and possibly the water collection device, is secured to said substrate by mechanical means.

13. The substrate (1) as claimed in one of the preceding claims, ***characterized in that*** the distribution of water is automatically triggered periodically and/or is controlled manually and/or is regulated by electronic/computing means.

14. The substrate (1) as claimed in one of the preceding claims, ***characterized in that*** all or part of the distributed water contains additives of the surfactant or degreasing agent type.

15. The substrate (1) as claimed in claim 14, ***characterized in that*** the water distribution comprises at least two consecutive spray steps, in particular a step with water containing additives of the surfactant or degreasing agent type and a step with additive-free water.

16. A method of "reactivating" photocatalytic and/or hydrophilic coatings placed on the surface of a substrate (1), especially transparent substrate of the glazing type, ***characterized in that*** the water is distributed periodically on the surface of said coatings using a device for distributing water combined with said substrate.

17. The method as claimed in claim 16, ***characterized in that*** the water is distributed so as to cause a stream of water over the entire surface of the coating.

18. The method as claimed in claim 16 or claim 17, ***characterized in that*** the water is distributed by means of at least one water spray rail (2) which is capable of emitting discontinuous water streams (3) or a continuous curtain of water directed toward the coated surface, especially so that the water flows from the top downward of said surface located in a nonhorizontal plane.

19. The method as claimed in claim 18, ***characterized in that*** the water is distributed automatically, according to a given periodicity, and/or by manual control.

20. The method as claimed in one of claims 16 to 19, ***characterized in that*** the distribution of water is regulated, in particular its periodicity and its flow rate, by taking into account a number of parameters such as the level of fouling of the coating or the ambient pluviometry.

21. The method as claimed in one of claims 16 to 20, ***characterized in that*** the water is distributed according to spray cycles comprising at least two consecutive sprayings, in particular one step with the water containing additives of the surfactant or degreasing agent type and a step with additive free water.

22. The use of a substrate combined with a device for distributing water according to one of claims 1 to 15 in order to decrease the frequency of cleaning of said substrate and/or decreasing its clogging by mineral fouling.
